# EUROPEAN PATENT APPLICATION

(11) **EP 4 583 396 A1**
(43) Date of publication of application: **09.07.2025**
(21) Application number: 24223701.4
(22) Date of filing: 30.12.2024
(51) Int. Cl.: H02P 5/50, B60N 2/02, H02P 5/52, H02P 5/56, H02P 6/04

(54) **MULTI-MOTOR CONTROL METHOD AND SYSTEM**

(30) Priority: 02.01.2024 CN 202410002203; 02.01.2024 CN 202420003261 U
(71) Applicant: Yanfeng International Automotive Technology Co., Ltd., Shanghai 201306 (CN)
(72) Inventor: SHENG, Haojun, Shanghai 201315 (CN); XU, Chengcheng, Shanghai 201315 (CD); SHU, Xiaojun, Shanghai 201315 (CD)
(74) Representative: Reitstötter Kinzebach

(57) **Abstract**

The present disclosure provides a multi-motor control method and system. The multi-motor control method includes: activating multiple motors based on a received request, where the multiple motors include a first motor and a second motor, and the first motor and the second motor are configured to drive a first slide rail assembly and a second slide rail assembly in a seat slide rail assembly, respectively; obtaining, in real time, first position information of the first motor and second position information of the second motor; and adjusting, based on the first position information and the second position information, a first operating speed of the first motor and/or a second operating speed of the second motor until the first motor and the second motor are synchronized. In the present disclosure, operating speeds of the motors are adjusted by obtaining real-time position information of the first motor and the second motor, thereby achieving independent and synchronous operation of the multiple motors.

## Description

### FIELD OF THE DISCLOSURE

The present disclosure relates to the field of driving components, and in particular to the field of synchronous control of driving components. More specifically, the present disclosure relates to a multi-motor control method and a multi-motor control system.

### BACKGROUND

With the continuous advancement of motor technology, more and more work and production scenarios rely on operation of motors. Multi-motor systems are widely applied in applications that require high drive load capacity, such as vehicles and computer numerical control machine tools. For example, in a vehicle, two motors may be utilized to separately control movements of two slide rail assemblies under a seat. Achieving synchronous control of multiple motors becomes a key challenge in these applications. This is because the synchronous control directly affects the stability and performance of the system.

Conventionally, methods for multi-motor synchronous control mainly involve speed detection, that is, operating speeds of the motors are detected and adjusted, to ensure that the motors operate at a same speed. However, such method cannot completely eliminate a problem of position deviation that may occur during operation of multiple motors.

### SUMMARY

Some embodiments of the present disclosure are to solve the above-mentioned problem in the conventional technology and provide a multi-motor control method, with which a synchronization process of multiple motors is improved in a cost-effective and reliable manner.

According to an aspect of the present disclosure, a multi-motor control method is provided. The multi-motor control method includes: activating multiple motors based on a received request, where the motors include a first motor and a second motor, and the first motor and the second motor are configured to drive a first slide rail assembly and a second slide rail assembly in a seat slide rail assembly, respectively; obtaining, in real time, first position information of the first motor and second position information of the second motor; and adjusting, based on the first position information and the second position information, a first operating speed of the first motor and a second operating speed of the second motor until the first motor and the second motor are synchronized.

Based on the above technical concept, the present disclosure may further include any one or more of the following alternatives.

In some alternatives, the step of adjusting, based on the first position information and the second position information, the first operating speed of the first motor and/or the second operating speed of the second motor until the first motor and the second motor are synchronized includes: obtaining, based on the first position information and the second position information, a position distance between the first motor and the second motor and a target position distance between a target position and one of the first motor and the second motor; and adjusting the first operating speed of the first motor and/or the second operating speed of the second motor until the position distance is less than a fourth preset value, in response to the position distance being greater than a first preset value, the target position distance being greater than a second preset value, and both the first motor and the second motor reaching a first preset speed, and preferably, the fourth preset value being less than the first preset value.

In some alternatives, the step of adjusting the first operating speed of the first motor and/or the second operating speed of the second motor until the position distance is less than the fourth preset value includes: controlling, based on the first position information and the second position information, one of the first motor and the second motor that is closer to the target position to decelerate or stop, until the position distance is less than the fourth preset value.

In some alternatives, the step of adjusting, based on the first position information and the second position information, the first operating speed of the first motor and/or the second operating speed of the second motor until the first motor and the second motor are synchronized further includes: generating a synchronization error signal in a case where the position distance is greater than the fourth preset value within a preset adjustment time period.

In some alternatives, the step of adjusting, based on the first position information and the second position information, the operating speed of the first motor and/or the second operating speed of the second motor until the first motor and the second motor are synchronized further includes: obtaining a set operating speed and a first set acceleration of the first motor and the second motor when current operating speeds of the first motor and the second motor are greater than a third preset value, either in response to the position distance being less than or equal to the first preset value or in response to the position distance being greater than the first preset value and the target position distance being less than the second preset value; controlling the first motor and the second motor to operate with the set operating speed and the first set acceleration, until current operating speeds of the first motor and the second motor reach a seventh preset value; and controlling the first motor and the second motor to operate with a constant speed at the seventh preset value.

In some alternatives, the step of controlling the first motor and the second motor to operate with the set operating speed and the first set acceleration, until current operating speeds of the first motor and the second motor reach the seventh preset value includes: maintaining one of the first motor and the second motor that is farther from the target position to operate at a second set acceleration, in response to the first position information and the second position information being not synchronized, where the second set acceleration is greater than the first set acceleration.

In some alternatives, the step of controlling the first motor and the second motor to operate with the constant speed at the seventh preset value includes: restoring the current operating speeds of the first motor and the second motor to the set operating speed, in response to the position distance being less than a sixth preset value.

In some alternatives, the step of controlling the first motor and the second motor to operate with the constant speed at the seventh preset value further includes: increasing the operating speed of one of the first motor and the second motor that is farther from the target position, in response to the position distance being greater than a fifth preset value, where the fifth preset value is greater than the sixth preset value.

In some alternatives, the method further includes: obtaining a set target stop speed and a first set deceleration of the first motor and the second motor; controlling the first motor and the second motor to operate with the first set deceleration, until current operating speeds of the first motor and the second motor reach an eighth preset value; and controlling the first motor and the second motor to operate with a constant speed at the eighth preset value.

In some alternatives, the step of controlling the first motor and the second motor to operate with the first set deceleration, until current operating speeds of the first motor and the second motor reach the eighth preset value includes: maintaining one of the first motor and the second motor that is closer to the target position to operate at a second set deceleration, in response to the first position information and the second position information being not synchronized, where the second set deceleration is greater than the first set deceleration.

In some alternatives, the step of controlling the first motor and the second motor to operate with the constant speed at the eighth preset value includes: reducing the operating speed of one of the first motor and the second motor that is closer to the target position, in response to the first position information and the second position information being not synchronized.

According to another aspect of the present disclosure, a multi-motor control system is provided. The multi-motor control system includes a control device configured to perform the method according to the first aspect of the present disclosure, a motor controller and a motor. The motor controller includes a first controller and a second controller, the first controller and the second controller are communicatively connected to each other, and at least one of the first controller and the second controller is communicatively connected to the control device. The motor includes a first motor and a second motor, the first controller and the second controller are respectively connected to the first motor and the second motor, the first controller and the second controller are configured to drive the first motor and the second motor respectively, and preferably, the first motor and the second motor are brushless motors.

In some alternatives, the first controller and the second controller are communicatively connected to each other through a controller area network bus, the at least one of the first controller and the second controller is communicatively connected to the control device through a local interconnect network bus, and where the control device is configured to transmit a seat adjustment signal to the at least one of the first controller and the second controller based on a seat adjustment instruction.

In some alternatives, one of the first controller and the second controller serves as a master controller and the other serves as a slave controller, the master controller is communicatively connected to the control device through a local interconnect network bus, and the master controller transmits a control instruction to the slave controller based on a seat adjustment signal. In some alternatives, the multi-motor control system further includes a first Hall sensor and a second Hall sensor, where the first Hall sensor and the second Hall sensor are configured to detect a first motion state of the first motor and a second motion state of the second motor, respectively, and preferably, the first Hall sensor and the second Hall sensor include multiple of linear Hall sensors.

In the present disclosure, real-time position information of the first motor and the second motor are obtained and operating speeds of the motors are adjusted, thereby achieving independent and synchronous operation of the motors.

### BRIEF DESCRIPTION OF THE DRAWINGS

Other features and advantages of the present disclosure will be better understood from the following detailed description of alternative embodiments in conjunction with the accompanying drawings. In the drawings:
Figure 1 shows a schematic diagram of a multi-motor control system according to an embodiment of the present disclosure;
Figure 2 shows a flow chart of a multi-motor control method according to an embodiment of the present disclosure;
Figure 3 shows a flow chart of a multi-motor control method according to another embodiment of the present disclosure;
Figure 4 shows a flow chart of a startup stage synchronization in Figure 3;
Figure 5 shows a flow chart of an operation stage synchronization in Figure 3; and
Figure 6 shows a flow chart of a stop stage synchronization in Figure 3.

### DETAILED DESCRIPTION

The implementation and use of embodiments are discussed in detail below. It should be understood, however, that the specific embodiments discussed are merely illustrative explanation of implementation and use of the present disclosure, and do not limit the scope of the present disclosure.

Moreover, flow charts and block diagrams in the drawings illustrate architecture, functions and operations that may be implemented in the method and system according to the embodiments of the present disclosure. It should be noted that the functions marked in blocks may be performed in an order different from the order shown in the drawings. For example, two blocks shown in succession may actually be executed in parallel, or sometimes may be executed in a reverse order, which depends on functions involved.

In addition, a structural position of a component in the description, such as above, under, and the like, is not absolute but relative. In this disclosure, "forwards" and "backwards" are defined relative to a forward and backward directions of a vehicle. In addition, a "transverse direction" refers to a direction that is relatively small in size, and may be referred to as a width direction; and a "longitudinal direction" refers to a direction that is relatively large in size, and may be referred to as a length direction.

In a vehicle, a seat of the vehicle is usually adjusted forwards or backwards through slide rail assemblies provided under the seat, to meet needs for the vehicle, such as testing and providing a comfortable seating experience for a driver or passengers. In a seat system of the vehicle, two slide rail assemblies under the seat are usually driven by a motor. That is, the motor carries the seat to move on the slide rail assemblies. In order to distribute the power of electricity to the slide rail assemblies on both sides, a connecting and fixing bracket needs to be provided between the two slide rail assemblies. It is found that the conventional driving device of the slide rail assemblies occupies a large space under the seat.

For example, for a new energy vehicle, the battery, which is a power source, is usually arranged under a carpet of a vehicle body. With such arrangement, a large space in the vehicle is occupied, and especially the remaining space under the seat is limited. In addition, for some new energy vehicles, an air conditioning outlet is further needed between the two slide rail assemblies of the seat. In conventional seat systems, two slide rail assemblies under the seat are driven by one motor, which causes a large space occupied by a driving system of the slide rail assemblies, and thereby results in a limited space under the seat.

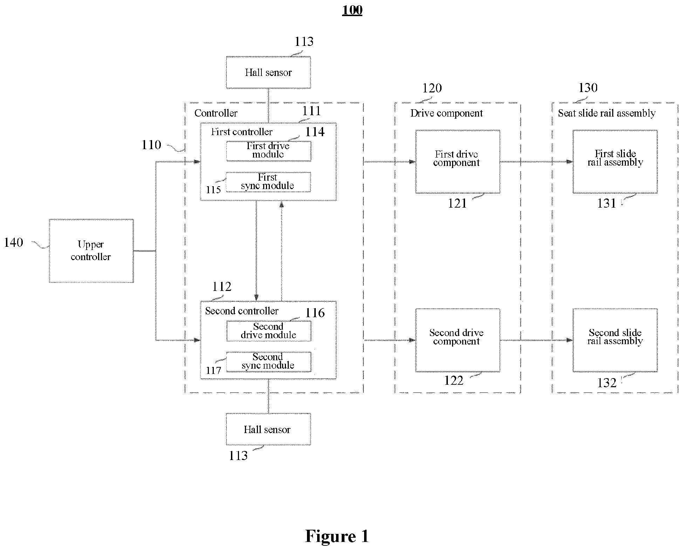

In order to solve the above problem, the present disclosure proposes a solution in which two slide rail assemblies are driven by two motors respectively to move independently from each other. In this way, a large-sized motor bracket in the conventional structure is eliminated and an available space between the two slide rail assemblies is increased. Reference is made to Figure 1, which shows a schematic diagram of a multi-motor control system according to an embodiment of the present disclosure.

A multi-motor control system 100 of a vehicle according to the present disclosure is for driving a seat slide rail assembly 130. The seat slide rail assembly 130 includes a first slide rail assembly 131 and a second slide rail assembly 132 that are spaced apart and arranged in a transverse direction of the vehicle. The multi-motor control system 100 generally includes a controller 110 and a motor 120. The controller 110 is configured to drive and control the motor 120 to bring the motor 120 into different operating states. The motor 120 is configured to drive the first slide rail assembly 131 and the second slide rail assembly 132 to move along a longitudinal direction of the vehicle. In an implementation, the controller 110 includes a first controller 111 and a second controller 112, and the motor 120 includes a first motor 121 and a second motor 122. The first controller 111 is electrically connected to the first motor 121, and the second controller 112 is electrically connected to the second motor 122. The first motor 121 is configured to drive the first slide rail assembly 131 of the seat, and the second motor 122 is configured to drive the second slide rail assembly 132 of the seat.

In this way, according to the present disclosure, two slide rail assemblies of the seat are driven through two motors, respectively. The motors may be arranged between a seat pan and the slide rail assemblies of the vehicle. There is no need to provide a connecting and fixing bracket between the two slide rail assemblies. Hence, a space occupied by the system 100 is reduced and a flexibility of an overall structural layout of the vehicle is improved.

In some examples, the first controller 111 includes a first driving module 114 and a first synchronization module 115; and the second controller 112 includes a second driving module 116 and a second synchronization module 117. The first driving module 114 and the second driving module 116 are configured to drive the first motor 121 and the second motor 122, respectively. The first synchronization module 115 and the second synchronization module 117 are configured to realize a synchronized operation of the first motor 121 and the second motor 122. In an implementation, at least one of the first controller 111 and the second controller 112 is communicatively connected to an upper controller 140 of the vehicle, and the first controller 111 and the second controller 112 are communicatively connected to each other. In this way, at least one of the first controller 111 and the second controller 112 may receive a control signal from the upper controller 140. The first controller 111 and the second controller 112 may transmit data to each other in real time through a communicatively connection. Hence, the first motor 121 and the second motor 122 can operate synchronously.

In some embodiments, the upper controller 140 may be a domain controller of the vehicle, such as a power domain controller, a chassis domain controller, or a body domain controller. In addition, the upper controller 140 may be a seat controller of the vehicle. In this case, the control system 100 may be provided in a seat system of the vehicle. In some examples, the controller may be integrated with a vehicle control unit. The vehicle control unit may be any control unit including the vehicle end, such as a vehicle electronic control unit (ECU) including a central control unit, a vehicle entertainment system, a body control unit, and the like.

In some embodiments, the first controller 111 and the second controller 112 may be communicatively connected to each other through a controller area network (CAN) bus. The CAN bus has an ability of real-time communication, which ensures timely information exchange between the two motors. In addition, the CAN bus allows multiple devices to share a same communication line for data transmission. Therefore, use of the CAN bus can simplify wiring of the driving system 100, so that cable quantity and complexity is reduced.

In some embodiments, at least one of the first controller 111 and the second controller 112 may be communicatively connected to the upper controller 140 through a local interconnect network (LIN) bus. The LIN bus is relatively low-cost compared to other communication protocols such as the CAN bus. Typically, a communication rate of the LIN bus may reach about 20kbps, while a communication rate of the CAN bus may reach about 800kbps. Since high bandwidth or high-speed communication is not generally required for communication between the controller 110 and the upper controller 140, use of the LIN bus can reduce a manufacturing cost of the multi-motor control system 100.

In some embodiments, the upper controller 140 may transmit, based on a seat adjustment instruction, a seat adjustment signal to at least one of the first controller 111 and the second controller 112 that is communicatively connected to the upper controller 140. The seat adjustment instruction may be generated from various scenarios such as adaptive adjustment of a seat position, welcoming guests, seeing guests off, testing, and user requests. The upper controller 140 controls the controller 110 based on the seat adjustment instruction generated from any of the above situation. On reception of the seat adjustment signal, the controller 110 drives a corresponding motor 120 to move the slide rail assembly along the longitudinal direction of the vehicle, realizing position adjustment of the seat.

In some embodiments, the first controller 111 acts as a master controller and the second controller 112 acts as a slave controller. In some examples, the first controller 111 acts as the slave controller and the second controller 112 acts as the master controller. At least the master controller in the controller 110 is communicatively connected to the upper controller 140 through the LIN bus. That is, the master controller needs to communicate with the upper controller 140, and the slave controller may selectively communicate with the upper controller 140. In a case where only the master controller communicates with the upper controller 140, the master controller receives the seat adjustment signal from the upper controller 140 via the LIN bus. The upper controller 140 controls operation of the master controller. The master controller transmits a control instruction to the slave controller via the CAN bus based on the seat adjustment signal, to control operation of the slave controller. In a case where the master controller and the slave controller both communicate with the upper controller 140, the upper controller 140 transmits the seat adjustment signal to both the master controller and the slave controller via the LIN bus, so that the two controllers start to operate independently. After the two controllers start operating, the master controller and the slave controller transmit real-time motion data of the motors to each other via the CAN bus, and the master controller transmits the control instruction to the slave controller based on a motion state of the slave controller.

In some embodiments, the seat adjustment instruction may include target position information, such as a final position of the seat, and more specifically, a position of a motor carrying the seat in the longitudinal direction of the vehicle. The target position information may allow the motors to be adjusted more accurately, so that the first motor 121 and the second motor 122 operate synchronously, thereby increasing a stability of a seat adjustment process and improving a stability of the vehicle. In addition, the control signal transmitted from the upper controller 140 may include the target position information, and may further include target speed information, an activation instruction, a stop instruction, and the like.

In some examples, real-time motion data transmitted between the master controller and the slave controller may include: data transmitted from the master controller to the slave controller, such as a current speed of the first motor 121, a current position of the first motor 121, a speed adjustment state of the first motor 121, a failure state of the first motor 121, an instruction requiring the second motor 122 to stop (for a failure situation), a target position of the second motor 122, a target speed of the second motor 122, a synchronization state, and an activation instruction and stop instruction based on the upper controller 140; and data transmitted from the slave controller to the master controller, such as a current position of the second motor 122, a current speed of the second motor 122, a speed adjustment state of the second motor 122, a failure state of the second motor 122, and an instruction requiring the first motor 121 to stop (for the failure situation).

In addition, in some embodiments, the multi-motor control system may further include a Hall sensor for detecting a motion state of the motor. In some examples, each of the first motor and the second motor may be provided with at least two Hall sensors, for example, two or three Hall sensors 113. The Hall sensor 113 is configured to detect motion states of the first motor 121 and the second motor 122. With the motion state detected by the Hall sensors 113, an accuracy of the synchronization of the two motors is further improved by the first controller 111 and the second controller 112.

In some examples, the motion states of the first motor 121 and the second motor 122 may include, but are not limited to, one or more of a current rotation speed, a current position, and a current rotation direction of the first motor 121 and the second motor 122.

In some embodiments, the Hall sensor 113 may be a linear Hall sensor or a switching Hall sensor. A waveform of a linear Hall sensor within an electrical cycle usually behaves as a function of sin and cos, that is, the waveform of the linear Hall sensor is continuous within the electrical cycle. Hence, the linear Hall sensor may obtain data for any movement angle of the motor within the electrical cycle. Therefore, use of the linear Hall sensor can improve the accuracy of synchronization of the motors. The working principle and output mode of the switching Hall sensor are relatively simple. The Hall sensor usually has two output states, i.e., with a magnetic field and without a magnetic field. Therefore, a switching Hall sensor usually has a low power consumption, so that an energy consumption of the driving system 100 can be reduced. In addition, cost of the switching Hall sensor is low, which is beneficial to saving a manufacturing cost of the driving system 100. In addition, the linear Hall sensor and the switching Hall sensor measure by detecting changes in the magnetic field, without the need to be in direct contact with a measurement target. Therefore, the object being measured is not affected.

In some embodiments, the first motor 121 and the second motor 122 may be brushless motors. A brushless motor is not equipped with a brush, so that friction and wear between the brush and a motor rotor is avoided, and a mechanical loss is reduced. Compared with other motors, such as a brush motor, the brushless motor has a longer life, a higher efficiency, less noise, a better stability, and can achieve more precise speed control and improve the accuracy of synchronization of the two motors.

In some embodiments, the first controller 111 and the second controller 112 may be provided on control panels (not shown) of the first motor 121 and the second motor 122, respectively. In this way, the first controller 111 may be integrated with the first motor 121 and the second controller 112 may be integrated with the second motor 122, so that the space occupied by the multi-motor control system 100 in the vehicle is reduced, and the flexibility of the layout in the vehicle is improved. It may be understood that arrangement of the controller 110 is not limited thereto. For example, the controller 110 may be arranged independently from the motor 120 as needed.

In the multi-motor control system according to the present disclosure, two slide rail assemblies under the seat of the vehicle are driven by two brushless motors respectively to move independently from each other. In this way, the large-sized motor bracket in the conventional structure is eliminated, and a risk of a passenger stepping on the motor bracket is avoided. In addition, the seat slide rail assemblies are driven by independent motors, so that an available space between the two slide rail assemblies is increased, which facilitates a flexible overall layout in the vehicle. In addition, in the multi-motor control system in the present disclosure, movement of the two motors are sensed by using high-precision Hall sensors. With the private CAN bus between the two motors and based on the high real-time performance of the CAN bus, a synchronous operation of the two motors is realized. In an exemplary embodiment of the present disclosure, a position error between the two motors may be within about ±2mm, and noise of the movement of the seat on the slide rail assembly through the brushless motor may be lower than about 35 decibels.

The multi-motor configuration is widely used in various fields due to the stronger drive load capability than a single-motor configuration. It is found that there is position deviation during operation of the multi-motor configuration, resulting in a reduced accuracy of synchronization.

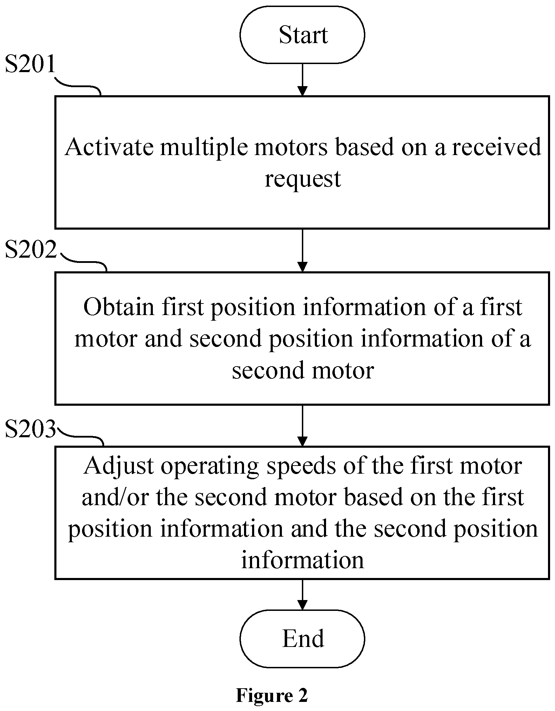

Reference is made to Figure 2, which shows a flow chart of a multi-motor control method according to an embodiment of the present disclosure.

The multi-motor control method according to the present disclosure may be applied for controlling slide rail assemblies of a seat system of a vehicle. In this case, multiple motors may respectively drive two slide rail assemblies under the seat of the vehicle to adjust a position of the seat. The multi-motor control method is described below based on an application of controlling slide rail assemblies in the seat system of the vehicle. It should be understood that application of the multi-motor control method according to the present disclosure is not limited thereto, and may be further applied in conveyor belts of production lines, ships, and other fields, as needed.

A multi-motor control method according to an embodiment of the present disclosure includes the following steps S201 to S203.

In step S201, multiple motors are activated based on a received request. The received request may be the seat adjustment instruction. The multiple motors include a first motor and at least one second motor. The first motor and the second motor are configured to drive a first slide rail assembly and a second slide rail assembly in a seat slide rail assembly, respectively. In some examples, the first motor and the at least one second motor are controlled by a first motor controller and at least one second motor controller, respectively. The first motor controller and the second motor controller are communicatively connected to each other.

In step S201, multiple motors may be activated based on a received seat adjustment instruction. The seat adjustment instruction may be generated from various scenarios such as adaptive adjustment of a seat position, welcoming guests, seeing guests off, testing, and user requests. In the embodiment, there are two slide rail assemblies under the seat of the vehicle, and therefore the motors may include the first motor and the second motor, for driving the two slide rail assemblies respectively.

In some embodiments, the first motor controller and the second motor controller may be communicatively connected to each other via a CAN bus to improve an accuracy of synchronization of the first motor and the second motor.

In step S202, first position information of the first motor and second position information of the second motor are obtained in real time.

In step S202, the corresponding position information of the first motor and the second motor may be obtained through a position sensor such as an encoder. In some examples, the position information may be a position of the first motor or the second motor in the longitudinal direction of the vehicle.

In step S203, an operating speed of the first motor and/or an operating speed of the second motor is adjusted based on the first position information and the second position information, until the two motors are synchronized.

In step S203, the first motor controller and the second motor controller may receive the position information from the position sensor and control the operating speed of the first motor and the operating speed of the second motor independently based on the position information, to synchronize the first motor and the second motor in terms of speed and position.

In this way, in the multi-motor control method according to the embodiment, operating speeds of different motors are adjusted based on the position information of the motors, so that the motors operate synchronously. Thereby, an accuracy of synchronization of the motors is improved, a stability of the vehicle seat during the adjustment is increased, and seating experience of the user is improved.

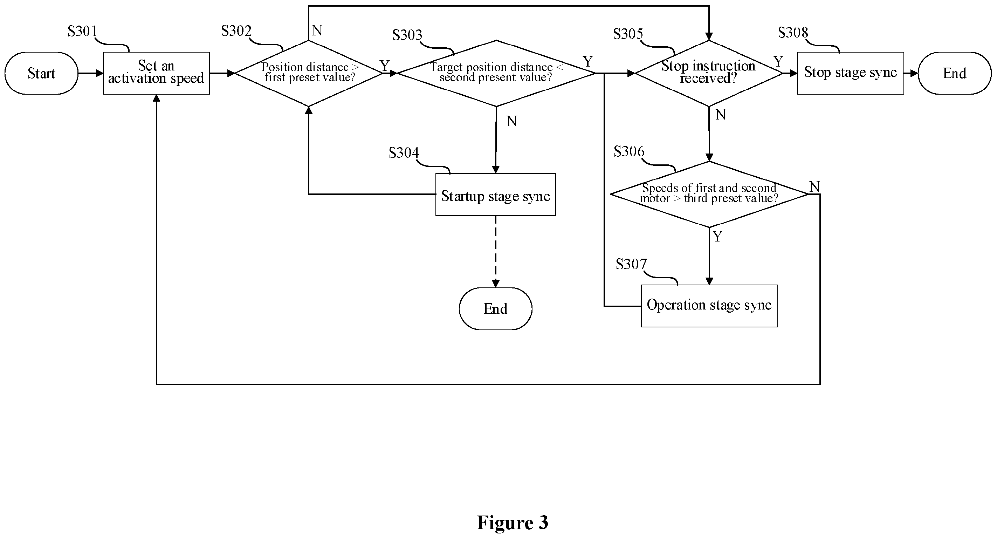

Reference is made to Figure 3, which shows a flow chart of a multi-motor control method according to another embodiment of the present disclosure.

A multi-motor control method according to another embodiment of the present disclosure includes the following steps S301 to S308.

In step S301, signals are transmitted to a first motor and a second motor respectively by a first motor controller and a second motor controller on reception of a seat adjustment signal, to activate the first motor and the second motor to operate at a motor starting speed preset in a seat system. In some embodiments, the motor starting speed may be 1000rpm.

In step S302, real-time position information of the first motor and the second motor is obtained through a position sensor, and a position distance (i.e., an absolute position difference) between the first motor and the second motor is obtained based on the obtained position information. It is determined whether the position distance is greater than a first preset value, which causes obvious non-synchronization of the motors. The position difference here may be a projected distance between the two motors in a longitudinal direction of the vehicle. In some embodiments, the first preset value may be 6mm. The method proceeds to S303 in a case where the position distance is greater than the first preset value; or otherwise, the method proceeds to S305.

In step S303, it is determined whether a target position distance between a current position of one of the first motor and the second motor and a target position is less than a second preset value. That is, it is determined whether the current position of one of the first motor and the second motor is close to the target position. In some embodiments, the second preset value may be 12mm. Here, the master controller may be one of the first controller and the second controller. The method proceeds to S305 in a case where the target position distance is less than the second preset value; or otherwise, the method proceeds to S304.

In a case where the target position distance is greater than or equal to the second preset value, it is determined that the current position of one of the first motor and the second motor is not close to the target position, and therefore the method proceeds to step S304 to start a startup stage synchronization.

The startup stage synchronization refers to a stage in which speeds of the two motors are adjusted after the motors are activated and moved, so that the motors operate stably. The startup stage synchronization may be a preparation process for an operation stage synchronization.

In step S304, after the startup stage synchronization is started, determination on the position distance between the first motor and the second motor is continuously performed. In a case where the position distance is still greater than the first preset value within a period of time, it is determined that the first motor and the second motor are still in obvious non-synchronization, and movement of the seat slide rail assembly is stopped to ensure safety of the seat adjustment process. In some examples, the period of time may be 10s.

On determining in step S302 that the position distance is less than or equal to the first preset value, or it is determined in step S303 that the target position distance between the current position of the first motor and the target position is less than the second preset value, the method proceeds to step S305 to determine whether a stop instruction from the master controller is received by the first motor controller and the second motor controller. The method proceeds to S308 in a case where the stop instruction is received, and proceed to S306 in a case where no stop instruction is received.

In step S306, it is determined whether the current speeds of the first motor and the second motor are greater than a third preset value. In some embodiments, the third preset value may be 1000rmp. In some other examples, the third preset value may be other value, such as a value greater than 1000rpm. In a case where the current speeds of the first motor and the second motor are both greater than the third preset value, the method proceeds to S307; or otherwise, the method returns to S301.

In a case where the current speeds of the first motor and the second motor are both greater than the third preset value, it is determined that the speeds of the first motor and the second motor reach a speed standard for the operation stage synchronization. Therefore, in step S307, the operation stage synchronization is started. The operation stage synchronization refers to synchronization of different motors during a process of moving towards the target position while a certain position distance is met.

On determining in step S306 that the current speeds of the first motor and the second motor are less than or equal to the third preset value, it is determined that the speeds of the first motor and the second motor does not meet the speed standard for the operation stage synchronization. In this case, the method returns to step S301 to adjust the starting speeds of the first motor and the second motor and restart the determination process.

In step S308, a stop stage synchronization is started. The stop stage synchronization refers to adjusting speeds of different motors to stop the motors when a certain synchronization condition is met. At the end of the stop stage synchronization, operation of the two motors is stopped and movement of the seat slide rail assembly is stopped.

In this way, the first motor and the second motor are synchronized respectively in three stages: startup, operation and stop. Hence, an accuracy of synchronization of the two motors is improved.

Processes of the startup stage synchronization, the operation stage synchronization, and the stop stage synchronization are described in detail below.

In Figure 3, the position distance between the first motor and the second motor and the target position distance between the target position and one of the first motor and the second motor are obtained based on the first position information and the second position information; and the startup stage synchronization is entered when the position distance is greater than the first preset value and the target position distance is greater than the second preset value and both the first motor and the second motor reach the first present speed. During the startup stage synchronization, the operating speeds of the motors are adjusted until the position distance between the two motors meets a certain preset condition.

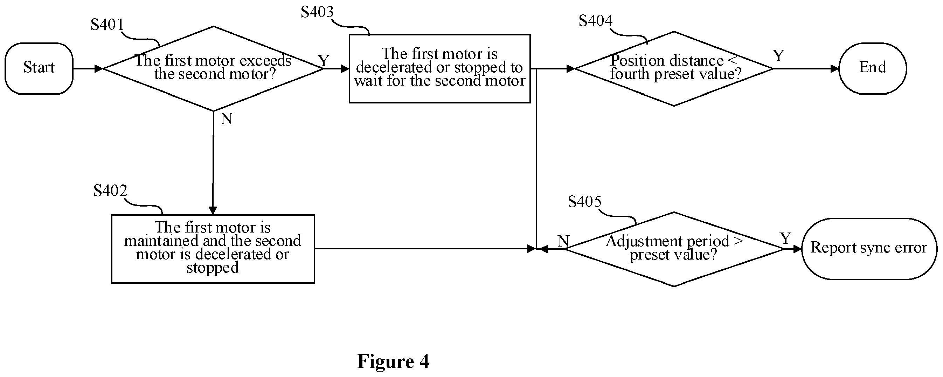

Reference is made to Figure 4, which shows a flow chart of a startup stage synchronization in Figure 3.

According to an embodiment of the present disclosure, a startup stage synchronization in a multi-motor control method includes the following steps S401 to S405.

In step S401, it is determined whether a position of the first motor exceeds a position of the second motor, by using initial positions of the first motor and the second motor as a reference. An initial position here may be a position before the motor starts rotating, or may be a current position of the motor.

In a case where the position of the first motor is behind the position of the second motor, in step S402, the first motor is maintained operating at the current speed, and the second motor is decelerated or stopped to wait for the first motor.

In a case where the position of the first motor is over the position of the second motor, in step S403, the second motor is maintained operating at the current speed, and the first motor is decelerated or stopped to wait for the second motor.

In S402 and S403, one of the first motor and the second motor that is closer to the target position is decelerated or stopped to wait for the other one of the first motor and the second motor that is farther from the target position. The one of the first motor and the second motor that is farther from the target position may be maintained at the current speed.

After the adjustment in step S402 and step S403, in step S404, a relationship between the position distance between the first motor and the second motor and a fourth preset value is determined. In a case where the position distance is less than the fourth preset value, it is determined that the two motors are preliminarily synchronized and the startup stage synchronization is completed.

Here, the fourth preset value is less than the first preset value, that is, the fourth preset value is set more strictly than the first preset value. In some embodiments, the fourth preset value may be 0.5mm.

On determining, in S404, that the position distance between the first motor and the second motor is greater than the fourth preset value, the method returns to S401 to continuously adjust positions of the first motor and the second motor. The determination (S405) on the position distance between the first motor and the second motor is continuously performed within a preset adjustment period. In a case where the position distance between the first motor and the second motor is still greater than the fourth preset value during the preset adjustment period, the first motor and the second motor fail to a set synchronization standard, and a synchronization error signal is generated. In some embodiments, the preset adjustment period may be 5s.

In this way, the startup stage synchronization of the first motor and the second motor is achieved, so that the first motor and second motor can operate at a same speed and a same position.

In Figure 3, in a case where the position distance is less than or equal to the first preset value, or in a case where the position distance is greater than the first preset value and the target position distance is less than the second preset value, an operation stage synchronization is performed for either case when current operating speed of the first motor and the second motor are greater than a third preset value.

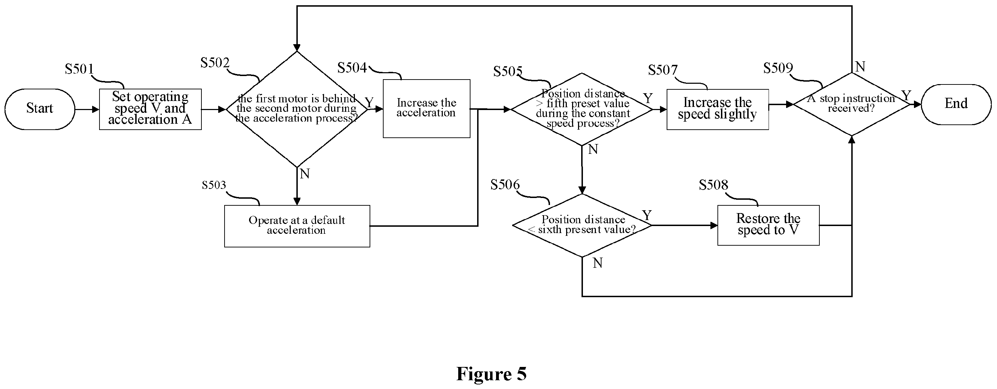

Reference is made to Figure 5, which shows a flow chart of an operation stage synchronization in Figure 3.

According to an embodiment of the present disclosure, a process of an operation stage synchronization in a multi-motor control method includes the following steps S501 to S509.

In step S501, after the operation stage synchronization starts, the first motor and the second motor start to operate based on a set operating speed V and a set acceleration A in the seat system. In some embodiments, the operating speed V may be 2000rpm, and the acceleration A may be 25rpm/s. The set operating speed V and the set acceleration A may be obtained from any device in the multi-motor control system or other storage unit. The operation stage may include an acceleration process and a constant speed process. That is, a motor operates from the set operating speed V and with the set acceleration A for a period of time (the acceleration process) to reach a certain set value (a seventh preset value), and then enters the constant speed process.

In step S502, based on the first position information of the first motor and the second position information of the second motor, it is determined whether the first motor is behind the second motor during the acceleration process in the operation stage.

In a case where the first motor exceeds the second motor during the acceleration process, the first motor is maintained operating at the set acceleration A in step S503. In this case, the acceleration of the second motor may be increased.

In a case where the first motor lags behind the second motor during the acceleration process, the acceleration of the first motor may be increased in step S504. In this case, the second motor may continue operating at the set acceleration A.

As can be seen from S502 to S504, in a case where the first position information is not synchronized with the second position information, the other one of the first motor and the second motor that is closer to the target position may be maintained operating at the set acceleration A (a first set acceleration). The one of the first motor and the second motor that is farther from the target position may be maintained operating at a second set acceleration, where the second set acceleration is greater than the set acceleration.

After the adjustment in step S503 and step S504, in step S505, it is determined whether the first motor lags behind or exceeds the second motor during the constant speed process of the operation stage, that is, a relationship between the position distance between the first motor and the second motor and a fifth preset value is determined. In some embodiments, the fifth preset value may be 0.5mm.

On determining in step S505 that the first motor does not lag behind the second motor during the constant speed process, the method proceeds to step S506 to determine whether the first motor is close to the second motor, i.e., determine a relationship between the position distance between the first motor and the second motor and a sixth preset value. In some embodiments, the sixth preset value may be 0.2mm. The method proceeds to step S508 in a case where the position distance is less than the sixth preset value; or otherwise, the method proceeds to step S509.

On determining in step S505 that the first motor lags behind the second motor during the constant speed process, the method proceeds to step S507 to increase the operating speed of the first motor. On determining in step S505 that the first motor exceeds the second motor during the constant speed process, the method proceeds to step S507 to increase the operating speed of the second motor.

On determining in step S506 that the position of the first motor is close to the second motor, that is, the position distance between the two is less than the sixth preset value, the speeds of the first motor and the second motor are restored, in step S508, to the preset operating speed V.

In a case where the position of the first motor is not close to the second motor, it is determined in step S509 whether a stop instruction from a master controller is received.

On reception of the stop instruction, the operation stage synchronization ends. In a case where no stop instruction is received, the method returns to step S502 and the process from step S502 to step S508 is repeated, to continuously adjust the speeds of the first motor and the second motor.

In this way, the operation stage synchronization of the first motor and the second motor is achieved. After the startup stage synchronization starts and before a stop instruction is received, the operation stage synchronization is performed to ensure that the first motor and the second motor operate synchronously.

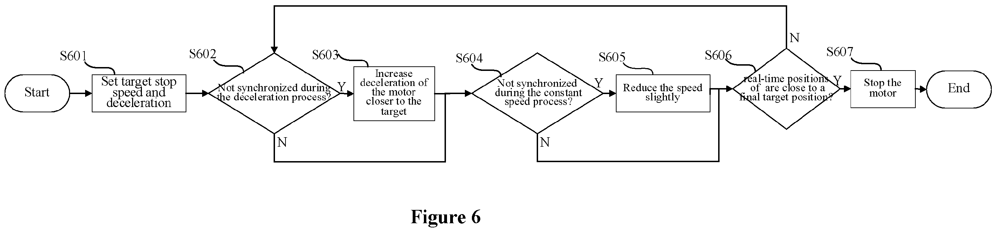

Reference is made to Figure 6, which shows a flow chart of a stop stage synchronization in Figure 3.

According to an embodiment of the present disclosure, a stop stage synchronization in a multi-motor control method includes the following steps S601 to S607.

In step S601, after the stop stage synchronization is started, the first motor and the second motor start to operate based on a target stop speed and a deceleration preset by the seat system. In some embodiments, the target stop speed may be 1000rpm, and the deceleration may be -25rmp/s. Set values of the target stop speed and the deceleration may be obtained from any device or other storage unit. The stop stage synchronization may include a deceleration process and a constant speed process. That is, a motor operates from a set target stop speed and with a set deceleration for a period of time (the deceleration process) to reach a certain set value (an eighth preset value), and then enters the constant speed process.

In step S602, based on the first position information of the first motor and the second position information of the second motor, it is determined whether the first motor is not synchronized with the second motor during the deceleration process in the stop stage.

In a case where the first motor and the second motor are not synchronized during the deceleration process, the deceleration of one of the first motor and the second motor that is closer to the target position is increased in step S603. In this case, the other motor that is further away from the target position may operate at the default deceleration.

In a case where the first position information is not synchronized with the second position information, the operating speed of one of the first motor and the second motor that is closer to the target position is reduced in step S605. The speed of the first motor is reduced in a case where the first motor exceeds the second motor during the constant speed process. The speed of the second motor is reduced in a case where the second motor exceeds the first motor during the constant speed process.

On determining in step S604 that the two motors are synchronized in the constant speed process, or after the adjustment in step S605, it is determined in step S606 whether real-time positions of the first motor and the second motor are close to a final target position.

In a case where the real-time positions of the first motor and the second motor are close to the target position, the first motor and the second motor are stopped in step S607, and thereby the stop stage synchronization ends.

On determining in step S606 that the real-time positions of the first motor and the second motor are not close to the target position, the method returns to step S602 and the process from step S602 to step S606 is repeated, to continuously adjust the speeds of the first motor and the second motor.

In this way, synchronization of the first motor and the second motor in the stop stage is achieved, and the synchronization in the stop stage may further ensure that the first motor and the second motor can be better synchronized in next operation. In addition, during the stop stage synchronization, it is cyclically determined whether the first motor and the second motor are in the deceleration process or the constant speed process, and speed adjustments are performed correspondingly to ensure synchronization of the two motors.

Referring back to Figure 1, a multi-motor control system 100 according to an embodiment of the present disclosure includes multiple motors 120, including a first motor 121 and at least one second motor 122. The multi-motor control system 100 further includes a startup module, an acquisition module, and a synchronization module. The starting module activates the first motor 121 and the at least one second motor 122 based on a received request. The first motor 121 and the at least one second motor 122 are controlled by a first motor controller 111 and a second motor controller 112, respectively. The first motor controller 111 and the second motor controller 112 are communicatively connected to each other. The acquisition module is configured to acquire, in real time, first position information of the first motor 121 and second position information of the second motor 122. The synchronization module is configured to adjust operating speeds of the first motor 121 and the second motor 122 based on the first position information and the second position information. For specific functions of the multi-motor control system 100, reference may be made to the description in the embodiment of Figure 1, which is not repeated here.

In some embodiments, the synchronization module may include a startup stage synchronization unit. The startup stage synchronization unit is configured to obtain, based on the first position information and the second position information, a position distance between the first motor 121 and the second motor 122 and a target position distance between a target position and one of the first motor 121 and the second motor 122. The startup stage synchronization unit performs the startup stage synchronization on the first motor 121 and the second motor 122, in response to the position distance being greater than a first preset value and the target position distance being greater than a second preset value and the first motor 121 and the second motor 122 both reaching a first preset speed, where the first preset speed may be 1000rmp. For specific functions of the startup stage synchronization unit, reference may be made to the description in the embodiment of Figure 4, which is not repeated here.

In some embodiments, the synchronization module may further include an operation stage synchronization unit. The operation stage synchronization unit is configured to perform an operation stage synchronization on the first motor 121 and the second motor 122 when current operating speeds of the first motor 121 and the second motor 122 are greater than a third preset value, in response to the position distance being less than or equal to a first preset value or in response to the position distance being greater than the first preset value and the target position distance being less than a second preset value. For specific functions of the operation stage synchronization unit, reference may be made to the description in the embodiment of Figure 5, which is not repeated here.

In some embodiments, the synchronization module may further include a stop stage synchronization unit. The stop stage synchronization unit is configured to perform a stop stage synchronization on the first motor 121 and the second motor 122 in a case where the two motors meet a certain synchronization condition and in response to a stop request from a master controller. For specific functions of the stop stage synchronization unit, reference may be made to the description in the embodiment of Figure 6, which is not repeated here.

In an exemplary embodiment of the present disclosure, a computer-readable storage medium is further provided. The computer-readable storage medium has non-transitory executable instructions stored thereon. The non-transitory executable instructions are for causing a computer to perform the multi-motor control method according to any of the above embodiments.

Alternatively, the computer-readable storage medium according to the embodiment may be a random access memory (RAM), a read-only memory (ROM), a semiconductor storage device, a magnetic surface storage device, an optical storage device, and the like.

In an exemplary embodiment of the present disclosure, a computer program is further provided, including instructions that, when executed by a computer, cause the computer to perform the multi-motor control method according to any of the above embodiments.

In an exemplary embodiment of the present disclosure, a vehicle is further provided, including the multi-motor control system according to any of the above embodiments.

In the multi-motor control method according to the present disclosure, operating speeds of the first motor and the second motor are independently adjusted by the first motor controller and the second motor controller based on the obtained real-time position information of the first motor and the second motor. The first motor controller and the second motor controller may be communicatively connected to each other through a CAN bus, so that a real-time data transmission rate between the two controllers is ensured and an interaction efficiency of the position information is improved.

It should be understood that the embodiments shown in the figures show only alternative configurations of the multi-motor control system according to the present disclosure. The configurations are only illustrative rather than restrictive. Other configurations are possible without departing from the idea and scope of the present disclosure.

Disclosed above are technical content and technical features of the present disclosure. However, it can be understood that those skilled in the art can make various modifications and improvements on the above-disclosed concepts with the creative thinking of the present disclosure. Such modifications and improvements all fall within the protection scope of the present disclosure. The description of the above embodiments is illustrative rather than restrictive, and the protection scope of the present disclosure is determined by the claims.

## Claims

1. A multi-motor control method, comprising:
activating (S101) a plurality of motors based on a received request, wherein the plurality of motors comprise a first motor and a second motor, and the first motor and the second motor are configured to drive a first slide rail assembly and a second slide rail assembly in a seat slide rail assembly, respectively;
obtaining (S102), in real time, first position information of the first motor and second position information of the second motor; and
adjusting (S103), based on the first position information and the second position information, a first operating speed of the first motor and/or a second operating speed of the second motor until the first motor and the second motor are synchronized.

2. The multi-motor control method according to claim 1, wherein the step of adjusting, based on the first position information and the second position information, the first operating speed of the first motor and/or the second operating speed of the second motor until the first motor and the second motor are synchronized comprises:
obtaining, based on the first position information and the second position information, a position distance between the first motor and the second motor and a target position distance between a target position and one of the first motor and the second motor; and
adjusting the first operating speed of the first motor and/or the second operating speed of the second motor until the position distance is less than a fourth preset value, in response to the position distance being greater than a first preset value, the target position distance being greater than a second preset value, and both the first motor and the second motor reaching a first preset speed, and preferably, the fourth preset value being less than the first preset value.

3. The multi-motor control method according to claim 2, wherein the step of adjusting the first operating speed of the first motor and/or the second operating speed of the second motor until the position distance is less than the fourth preset value comprises: controlling, based on the first position information and the second position information, one of the first motor and the second motor that is closer to the target position to decelerate or stop, until the position distance is less than the fourth preset value.

4. The multi-motor control method according to claim 2 or 3, wherein the step of adjusting, based on the first position information and the second position information, the first operating speed of the first motor and/or the second operating speed of the second motor until the first motor and the second motor are synchronized further comprises: generating a synchronization error signal in a case where the position distance is greater than the fourth preset value within a preset adjustment time period.

5. The multi-motor control method according to any one of claims 2 to 4, wherein the step of adjusting, based on the first position information and the second position information, the first operating speed of the first motor and/or the second operating speed of the second motor until the first motor and the second motor are synchronized further comprises:
obtaining a set operating speed and a first set acceleration of the first motor and the second motor when current operating speeds of the first motor and the second motor are greater than a third preset value, either in response to the position distance being less than or equal to the first preset value or in response to the position distance being greater than the first preset value and the target position distance being less than the second preset value;
controlling the first motor and the second motor to operate with the set operating speed and the first set acceleration, until current operating speeds of the first motor and the second motor reach a seventh preset value; and
controlling the first motor and the second motor to operate with a constant speed at the seventh preset value.

6. The multi-motor control method according to claim 5, wherein the step of controlling the first motor and the second motor to operate with the set operating speed and the first set acceleration, until current operating speeds of the first motor and the second motor reach the seventh preset value comprises:
maintaining one of the first motor and the second motor that is farther from the target position to operate at a second set acceleration, in response to the first position information and the second position information being not synchronized, wherein the second set acceleration is greater than the first set acceleration.

7. The multi-motor control method according to claim 5 or 6, wherein the step of controlling the first motor and the second motor to operate with the constant speed at the seventh preset value comprises:
restoring the current operating speeds of the first motor and the second motor to the set operating speed, in response to the position distance being less than a sixth preset value.

8. The multi-motor control method according to any one of claims 5 to 7, wherein the step of controlling the first motor and the second motor to operate with the constant speed at the seventh preset value further comprises:
increasing the operating speed of one of the first motor and the second motor that is farther from the target position, in response to the position distance being greater than a fifth preset value, wherein the fifth preset value is greater than the sixth preset value.

9. The multi-motor control method according to any one of claims 1 to 8, further comprising:
obtaining a set target stop speed and a first set deceleration of the first motor and the second motor;
controlling the first motor and the second motor to operate with the first set deceleration, until current operating speeds of the first motor and the second motor reach an eighth preset value; and
controlling the first motor and the second motor to operate with a constant speed at the eighth preset value.

10. The multi-motor control method according to claim 9, wherein the step of controlling the first motor and the second motor to operate with the first set deceleration, until current operating speeds of the first motor and the second motor reach the eighth preset value comprises:
maintaining one of the first motor and the second motor that is closer to the target position to operate at a second set deceleration, in response to the first position information and the second position information being not synchronized, wherein the second set deceleration is greater than the first set deceleration.

11. The multi-motor control method according to claim 9 or 10, wherein the step of controlling the first motor and the second motor to operate with the constant speed at the eighth preset value comprises:
reducing the operating speed of one of the first motor and the second motor that is closer to the target position, in response to the first position information and the second position information being not synchronized.

12. A multi-motor control system (100), comprising a control device (140) configured to perform the method according to any one of claims 1 to 11, a motor controller (110) and a motor (120), wherein
the motor controller (110) comprises a first controller (111) and a second controller (112), the first controller (111) and the second controller (112) are communicatively connected to each other, and at least one of the first controller (111) and the second controller (112) is communicatively connected to the control device (140); and
the motor (120) comprises a first motor (121) and a second motor (122), the first controller (111) and the second controller (112) are respectively connected to the first motor (121) and the second motor (122), the first controller (111) and the second controller (112) are configured to drive the first motor (121) and the second motor (122) respectively, and preferably, the first motor (121) and the second motor (122) are brushless motors.

13. The multi-motor control system according to claim 12, wherein the first controller (111) and the second controller (112) are communicatively connected to each other through a controller area network bus, the at least one of the first controller (111) and the second controller (112) is communicatively connected to the control device (140) through a local interconnect network bus, and wherein the control device (140) is configured to transmit a seat adjustment signal to the at least one of the first controller (111) and the second controller (112) based on a seat adjustment instruction.

14. The multi-motor control system according to claim 12 or 13, wherein one of the first controller (111) and the second controller (112) serves as a master controller and the other serves as a slave controller, the master controller is communicatively connected to the control device (140) through a local interconnect network bus, and the master controller transmits a control instruction to the slave controller based on a seat adjustment signal.

15. The multi-motor control system according to any one of claims 12 to 14, further comprising a first Hall sensor (113) and a second Hall sensor (113), wherein the first Hall sensor (113) and the second Hall sensor (113) are configured to detect a first motion state of the first motor (121) and a second motion state of the second motor (122), respectively, and preferably, the first Hall sensor (113) and the second Hall sensor (113) comprise a plurality of linear Hall sensors.
